Europäisches Patentamt

European Patent Office

Office européen des brevets

(11) Veröffentlichungsnummer: **0 110 209**
**A1**

(12) EUROPÄISCHE PATENTANMELDUNG

(21) Anmeldenummer: 83111215.6

(22) Anmeldetag: 10.11.83

(51) Int. Cl.³: **C 08 F 218/08, C 08 F 222/14,**
**C 09 J 3/14, C 09 J 7/04**
**//**
**(C08F218/08, 222/14, 220/04),**
**(C08F222/14, 218/08,**
**220/04)**

(30) Priorität: 18.11.82 DE 3242486

(43) Veröffentlichungstag der Anmeldung: 13.06.84
Patentblatt 84/24

(84) Benannte Vertragsstaaten: BE DE FR NL

(71) Anmelder: Henkel Kommanditgesellschaft auf Aktien,
Postfach 1100 Henkelstrasse 67,
D-4000 Düsseldorf-Holthausen (DE)

(72) Erfinder: Ritter, Wolfgang, Dr., Hochdahler Strasse 32,
D-4010 Hilden (DE)

(54) Filmbildende für Klebezwecke geeignete Dispersionen und deren Verwendung als wasseraktivierbare Beschichtungen.

(57) Verfahren zur Herstellung von wäßrigen für Klebezwecke geeignete Dispersionen durch Polymerisation einer
Kombination, bezogen auf die Dispersion, von
     5 bis 47 Gewichtsprozent Vinylacetat,
     5 bis 47 Gewichtsprozent Dialkyl-(C₂-C₆)-maleinat so-
          wie
     6 bis 25 Gewichtsprozent (Meth)acrylsäure,
     die bis zur Hälfte durch Crotonsäure ersetzt sein kann,
in Gegenwart eines anionische Gruppen enthaltenden
Schutzkolloids und gegebenenfalls weitere übliche Hilfsmittel in wäßriger Phase sowie Verwendung dieser Dispersionen zum Beschichten von Substraten zwecks Herstellung von wasseraktivierbaren Klebefilmen, insbesondere
zwecks Herstellung von wasseraktivierbaren Beschichtungen auf Papier.

EP 0 110 209 A1

Henkelstraße 67

4000 Düsseldorf, den    6. Juli 1983

0110209
HENKEL KGaA
ZR-FE/Patente

Dr.SchOe/Ge

Patentanmeldung

D 6705 EP

"Filmbildende für Klebezwecke geeignete Dispersionen
und deren Verwendung als wasseraktivierbare
Beschichtungen"

Die vorliegende Erfindung betrifft ein Verfahren zur
Herstellung von wäßrigen für Klebezwecke geeigneten
Dispersionen auf Basis von Mischpolymerisaten des
Vinylacetats mit anderen copolymerisierbaren Monomeren
sowie deren Verwendung zur Herstellung von wasseraktivierbaren Klebefilmen.

Mit Lösungsmitteln, insbesondere mit Wasser aktivierbare
Klebefilme sind seit langem bekannt. Sie können sowohl
als freitragende Filme als auch auf Trägermaterialien
aufgebracht zum Einsatz gelangen. Falls sie auf Papier
bzw. papierähnlichen Werkstoffen aufgebracht worden sind,
ist eine wesentliche Forderung, daß die beschichteten
Materialien glatt liegen und nicht aneinander festkleben,
das heißt, daß sie blockfrei gestapelt werden können.
Seit langem verwendet man für derartige Beschichtungen
Stärke bzw. abgebaute Stärke oder Stärkederivate sowie
auch Cellulosederivate, Gelatine oder andere Naturstoffe.
Bei der Verwendung der Naturstoffe ist von großem
Nachteil, daß diese im Laufe der Zeit von Mikroorganismen
angegriffen und zersetzt werden. Die Mitverwendung
von größeren Mengen mikrobiozider Stoffe ist in diesem

0110209
HENKEL KGaA
ZR-FE/Patente

Fall notwendig. Daher verwendet man zur Herstellung von wasseraktivierbaren Klebern bzw. mit wasseraktivierbaren Klebstoffen, beschichteten Papieren seit längerer Zeit synthetische Polymere, die aus Lösung mit organischen Lösungsmitteln oder als Schmelze aufgebracht werden. Zu diesem Zwecke eignen sich unter anderem die Mischpolymerisate des Vinylpyrrolidons. Einerseits ist die Mitverwendung von organischen Lösungsmitteln häufig unerwünscht, auf der anderen Seite bringt der Auftrag über die Schmelze gewisse Schwierigkeiten mit sich, die in der apparativen Ausgestaltung der Auftragsanlage stehen.

Es wäre daher wünschenswert, die wasseraktivierbaren Beschichtungen in hochkonzentrierter Form und bei nicht zu hoher Viskosität aufzubringen. Vorteilhaft wäre es daher, wenn man bei relativ niedriger Viskosität Dispersionen mit etwa 50 % Feststoffgehalt zur Verfügung hätte, die zu leicht wieder mit Wasser aktivierbaren Klebstoffilmen führt.

Eine spezielle Aufgabe der vorliegenden Erfindung war es daher, eine Klebstoffdispersion zu finden, die bei einem hohen Festkörpergehalt es gestattet, einen gleichmäßigen Auftrag auf ein Substrat zu erzeugen, wobei glänzende Filme erzielt werden, die nicht hygroskopisch sind und leicht wieder mit Wasser aktiviert werden können. Außerdem sollten die Filme auf Papier bzw. papierähnlichen Materialien glatt haften und zu dauerhaft flach liegenden nicht blockenden Klebematerialien in Form von Streifen, Blättern oder Etiketten führen.

...

Erfindungsgemäß wird die gestellte Aufgabe gelöst mit für zu Klebezwecken geeigneten wäßrigen Dispersionen auf Basis von Copolymerisaten aus Vinylacetat, Dibutylmaleat, Acrylsäure sowie Schutzkolloiden und/oder Emulgatoren. Diese Dispersionen werden dadurch hergestellt, daß man eine Kombination folgender Monomeren

a) 5 bis 47 Gewichtsprozent Vinylacetat,

b) 5 bis 47 Gewichtsprozent Dialkyl-$(C_2-C_6)$-maleinat sowie

c) 6 bis 25 Gewichtsprozent (Meth)acrylsäure, die bis zur Hälfte durch Crotonsäure ersetzt sein kann

in Gegenwart eines anionische Gruppen enthaltenden Schutzkolloids und gegebenenfalls weitere übliche Hilfsmittel in wäßriger Phase polymerisiert, wobei sich die Prozentangaben auf die gesamte Dispersion beziehen.

Das Schutzkolloid soll in einer Menge von etwa 0,2 bis 4 %, bezogen auf die fertige Dispersion eingesetzt werden. Als besonders geeignet hat sich ein wasserlösliches im Mischpolymerisat aus Vinylmethylether und Maleinsäure erwiesen, das vorzugsweise in Form des Ammonium- bzw. Natriumsalzes vorliegt. Auch andere Anionen-, insbesondere Carboxylgruppen enthaltende Schutzkolloide können verwendet werden wie beispielsweise teilverseiftes Polyacrylamid oder auch das Natriumsalz von Carboxymethylcellulose. Andere übliche Schutzkolloide sollten neben den zwingend vorgeschriebenen anionenaktiven nur in untergeordneter Menge mitverwendet werden. Hierbei handelt es sich um nichtionogene Schutzkolloide wie etwa wasserlösliche Methylcellulose, Polyvinylalkohol oder Polyacrylamid.
In den meisten Fällen ist es zweckmäßig, zusätzlich zu den Schutzkolloiden noch geringere Mengen von insbesondere nichtionogenen Emulgatoren in einer Menge von 0,05 bis 2 % auf den polymerisierbaren Anteil mitzuverwenden.

. . .

In diesen Fällen hat es sich als zweckmäßig erwiesen, Ethylenoxidaddukte an Fettalkohole oder an Alkylphenole einzusetzen.

Nach einer bevorzugten Ausführungsform werden als polymerisierbare Monomere

a) 10 bis 45 Gewichtsprozent Vinylacetat

b) 10 bis 42 Gewichtsprozent Dibutylmaleinat sowie

c) 13 bis 22 Gewichtsprozent (Meth)acrylsäure,
    die zwischen 1/10 bis 1/2 durch Crotonsäure
    ersetzt sein kann,

verwendet, wobei sich die Prozentangaben auf die gesamte Dispersion beziehen.

Als bevorzugt hat sich der Einsatz des Schutzkolloids aus dem Mischpolymerisat des Vinylmethylethers mit Maleinsäure (Gantrez AN 119) erwiesen. Auch in diesem Falle ist die Mitverwendung eines nichtionogenen Netzmittels wie des Ethylenoxidadduktes von 8 bis 12 Mol Ethylenoxid an Nonylphenol zweckmäßig.

Zur Herstellung der neuen Dispersionen können selbstverständlich weitere bei der Polymerisation übliche Hilfsmittel mitverwendet werden. Es handelt sich hierbei um den Einsatz von niederen Alkoholen wie etwa Isopropanol, Ethanol oder auch längerkettigen Alkoholen wie Butanol, Hexanol und dergleichen, die bei der späteren Verarbeitung ein Verlaufen bzw. die Filmbildung der Dispersion begünstigen. Diese Hilfsmittel werden aber nur in untergeordneter Menge eingesetzt und dürfen die Eigenschaften der Dispersion nicht wesentlich verändern. Ihr Anteil wird in der Regel 5 %, insbesondere 2 % der fertigen Dispersion nicht übersteigen. Auch kann es sinnvoll sein, äußere Weichmacher für den Klebstofffilm wie etwa Alkohole vom Typ des Glycerins, Diethylenglykols oder des Neopentylglykols mit einzusetzen.

. . .

Zur Durchführung der eigentlichen Dispersion werden als Initiatoren wasserlösliche Peroxide bzw. Redox-Systeme eingesetzt. In die wäßrige Phase, die auf einen für die Polymerisation geeigneten pH-Wert eingestellt ist, werden Schutzkolloid und Emulgator eingetragen. Nach dem Erwärmen auf die durch die Initiatoren benötigte Temperatur läßt man dann das Gemisch der Mono-meren zweckmäßig kontinuierlich einlaufen. Selbstver-ständlich ist es auch möglich, in einem geeigneten Reaktor die Polymerisation kontinuierlich durchzuführen. Hier eignen sich mit statischen Mischelementen versehene Rohrsysteme oder Rührwerkskaskaden oder auch geeignete Rührkolonnen, bei denen gegebenenfalls die Initiatoren bzw. Monomeren an verschiedenen Stellen eingegeben werden.

Man wird die Konzentration im allgemeinen so wählen, daß die fertige Dispersion einen Feststoffgehalt zwischen etwa 35 und 60, insbesondere aber 45 und 60 Gewichtsprozent aufweist. Die Viskosität der Dispersionen richtet sich nach dem vorgesehenen Verwendungszweck und soll zwischen etwa 2 000-15 000  mPa·s, vorzugsweise 3 000 bis 6 000 mPa·s, bei 25 °C nach Brookfield liegen. Die Teilchengröße der dispersen Phase liegt bei etwa 300 bis 4 000, vorzugsweise 300 bis 1 000 nm.

Die erfindungsgemäß erhältlichen Dispersionen stellen gute Klebmittel mit filmbildenden Eigenschaften dar. Sie eignen sich zum Beschichten der verschiedensten Substrate und können sowohl als trägerfreie Filme wie auch auf Trägern aufgebracht weiterverwendet werden. Sie lassen sich leicht mit Wasser aktivieren und zeigen insbesondere hohe Klebkraft zwischen Papier bzw. aus Cellulosematerialien aufgebauten Substraten.

...

Unter Verwendung der neuen Dispersionen lassen sich
wasseraktivierbare Beschichtungen auf Papier herstellen,
die einen hohen Glanz aufweisen und wiederbefeuchtet
zu festen Verklebungen mit anderen Materialien führen.

0110209
HENKEL KGaA
ZR-FE/Patente

## Beispiel 1

In einem Polymerisationsbehälter wurden zunächst 680 g demineralisiertes Wasser und 1 g des Additionsproduktes von 10 Mol Ethylenoxid an Nonylphenol sowie 6,6 g Natriumhydroxid gegeben. Nachdem man unter Rühren 18 g eines Mischpolymerisates aus Vinylmethylether und Maleinsäure (Gantrez AN 119 der GAF) gegeben hatte, wurde auf 70 $^\circ$C erwärmt. Nach Stehenlassen wurde diese Vorlösung mit 20 g Isopropanol versetzt.

Zur Initiierung der Polymerisation wurde eine Lösung von 10 g Kaliumperoxodisulfat in 150 g Wasser hergestellt.

Als Monomergemisch wurde verwendet 490 g Vinylacetat, 450 g Dibutylmaleinat, 175 g Acrylsäure und 18,5 g Crotonsäure.

Zu der eingangs genannten Lösung ließ man bei 75 $^\circ$C etwa 6 % des Monomergemisches zulaufen und rührte während 10 Minuten kräftig durch. Dabei emulgierte das Monomergemisch und die Polymerisation wurde durch Zugabe des Initiators ausgelöst. Nachdem die Polymerisation angesprungen war, wurden Monomeres und Initiatorlösung während 4 Stunden etwa gleichmäßig zudosiert, so daß die Polymerisationstemperatur zwischen 75 und 78 $^\circ$C lag. Nach Beendigung der Polymerisation wurde abgekühlt und eine stabile Dispersion erhalten.

...

## Beispiel 2

In einem Polymerisationsbehälter wurden 1 326 ml Wasser, 2 g des Adduktes von 10 Mol Ethylenoxid an Nonylphenol, 24,2 g Natriumhydroxid sowie 66 g des Mischpolymeren aus Vinylmethylether und Maleinsäure (vergl. Beispiel 1). Nach Erwärmen auf 72 $^\circ$C wurden noch 40 g i-Propanol zugefügt.

Das Monomergemisch bestand aus 956 g Vinylacetat, 879 g Dibutylmaleinat, 341 g Acrylsäure und 36 g Crotonsäure. Zur Initiierung wurden 19,5 g Kaliumperoxodisulfat in 290 ml Wasser verwendet.

Die Polymerisation wurde wie im Beispiel 1 durchgeführt.

## Beispiel 3

Es wurde wie im vorstehenden Beispiel verfahren, jedoch mit einem unterschiedlichen Monomergemisch aus 930 g Vinylacetat, 854 g Dibutylmaleinat, 394 g Acrylsäure und 36 g Crotonsäure.

In der nachfolgenden Tabelle sind die Feststoffgehalte, der pH-Wert, die Viskosität und die Teilchengröße der Dispersionen wiedergegeben.

Tabelle

| Beispiel | 1 | 2 | 3 |
|---|---|---|---|
| Feststoffgehalt/ Gew.-% | 57,2 | ca. 54 | ca. 55 |
| pH-Wert | 3,8 | 3,6 | 3,7 |
| Viskosität nach Brookfield/mPa·s (25 $^\circ$C) | 13 800 | 5 700 | 4 700 |
| Teilchengröße/nm | ca. 400 | ca.1 000 | ca. 700 |

. . .

0110209
HENKEL KGaA
ZR-FE/Patente

Anwendungsbeispiel

Ein 80 µm dicker Film der Dispersionen aus den Beispielen 1 bis 3 wird auf Papier aufgezogen. Die Trocknung erfolgt bei Raumtemperatur innerhalb von 1 bis 3 Minuten. Die Klebstoffilme sind rippenfrei und glänzend.

Zur Verklebung werden sie mit einem nassen Schwamm oder mit der Zunge angefeuchtet. Die gummierte Schicht wird mit unbeschichtetem Papier verklebt. Etwa 3 Sekunden nach der Fixierung hat der Klebstoff abgebunden. Die Verklebung ist nur unter Papierausriß zu trennen.

Anwendungsbeispiel

0110209
HENKEL KGaA
ZR-FE/Patente

## Patentansprüche

1) Verfahren zur Herstellung von wäßrigen für Klebezwecke geeignete Dispersionen auf Basis von Copolymerisaten aus Vinylacetat, Dibutylmaleat, Acrylsäure
sowie Schutzkolloiden und/oder Emulgatoren, dadurch
gekennzeichnet, daß eine Kombination folgender
Monomeren, bezogen auf die Dispersion, von

a) 5 bis 47 Gewichtsprozent Vinylacetat

b) 5 bis 47 Gewichtsprozent Dialkyl-$(C_2-C_6)$-maleinat
   sowie

c) 6 bis 25 Gewichtsprozent (Meth)acrylsäure,
   die bis zur Hälfte durch Crotonsäure
   ersetzt sein kann

in Gegenwart eines anionische Gruppen enthaltenden
Schutzkolloids und gegebenenfalls weitere übliche
Hilfsmittel in wäßriger Phase polymerisiert wird.

2) Verfahren nach Anspruch 1, dadurch gekennzeichnet,
daß die polymerisierbaren Monomeren bestehen aus
einer Kombination, bezogen auf die Dispersion, von

a) 10 bis 45 Gewichtsprozent Vinylacetat

b) 10 bis 42 Gewichtsprozent Dibutylmaleinat sowie

c) 13 bis 22 Gewichtsprozent (Meth)acrylsäure,
die zwischen 1/10 bis 1/5 durch Crotonsäure ersetzt
ist, und das Schutzkolloid ein Mischpolymerisat
des Vinylmethylethers mit Maleinsäure ist.

3) Verwendung von Dispersionen nach den Ansprüchen 1
und 2 zum Beschichten von Substraten zwecks Herstellung von wasseraktivierbaren Klebefilmen.

4) Verwendung der Dispersionen nach Ansprüchen 1 und 2
zwecks Herstellung von wasseraktivierbaren Beschichtungen auf Papier.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-1 495 532 (DUNLOP RUBBER CO.) <br> * Anspruch 1; Beispiel 1 * <br> --- | 1,2 | C 08 F 218/08 <br> C 08 F 222/14 <br> C 09 J 3/14 <br> C 09 J 7/04 // <br> (C 08 F 218/08 <br> C 08 F 222/14 |
| X | FR-A-2 098 892 (RHONE-POULENC) <br> * Anspruch 1 * <br> ----- | 1 | C 08 F 220/04 ) <br> (C 08 F 222/14 <br> C 08 F 218/08 <br> C 08 F 220/04 ) |
| | | | RECHERCHIERTE SACHGEBIETE (Int. Cl. 3) |
| | | | C 08 F |

Der vorliegende Recherchenbericht wurde für alle Patentansprüche erstellt.

| Recherchenort <br> DEN HAAG | Abschlußdatum der Recherche <br> 21-02-1984 | Prüfer <br> CAUWENBERG C.L.M. |
|---|---|---|